# EUROPÄISCHE PATENTSCHRIFT

(11) **EP 1 090 736 B1**
(45) Veröffentlichungstag und Bekanntmachung des Hinweises auf die Patenterteilung: **20.10.2004**
(21) Anmeldenummer: 00118338.3
(22) Anmeldetag: 24.08.2000
(51) Int. Cl.: B29C 51/38

(54) **Vorrichtung zum Formen und Ausstanzen von Behältern aus einer thermoplastischen Kunststofffolie**
Apparatus for forming and punching out of containers made of a thermoplastic foil
Appareil à former et découper des récipients à partir d'une feuille thermoplastique

(30) Priorität: 09.10.1999 DE 19948768
(43) Veröffentlichungstag der Anmeldung: 11.04.2001
(73) Patentinhaber: Adolf Illig Maschinenbau GmbH & Co. KG, 74081 Heilbronn (DE)
(72) Erfinder: Karbach, Helmut, 74172 Neckarsulm-Amorbach (DE)

(56) Entgegenhaltungen:
- DE-A- 2 146 217
- US-A- 4 565 513

## Beschreibung

Die Erfindung betrifft eine Vorrichtung zum Formen und Ausstanzen von Behältern aus einer thermoplastischen Kunststofffolie nach der Gattung des Anspruches 1.

Aus der DE 21 46 217 ist eine gattungsbildende Vorrichtung bekannt, bei der der Tisch, der eine Werkzeughälfte mit den formgebenden Teilen trägt, über einen Kniehebelantrieb bewegt wird. Die Stanzbewegung zum Ausstanzen der geformten Behälter erfolgt in der kombinierten Form-/Stanzstation durch eine Stanzhubeinrichtung, bestehend aus einem am Tisch angreifenden Antrieb, der taktweise eine geringe Hubbewegung durchführt und dabei die unteren Lagerböcke des Kniehebelantriebes höhenmäßig verschiebt. Dazu sitzen die Lagerböcke auf einer Halteplatte, diese auf einer Gewindespindel, die in einer drehbaren Mutter sitzt. Diese Mutter wird durch einen Antrieb ( Pos. 55) verdreht. Beschrieben ist als Antrieb ein Zylinder, der als Kraftzylinder bezeichnet wird. Solche Zylinder haben bauartbedingt einen festgelegten Hub und führen eine bestimmte Fahrgeschwindigkeit aus, die nur durch aufwendige Maßnahmen reproduzierbar verändert und in der Steuerung abgespeichert werden kann. Eine Veränderung der Stanzgeschwindigkeit hat aber z. B. positive Auswirkungen auf den Lärmpegel der Vorrichtung und auf die Standzeit der Schnittteile des Form-/Stanzwerkzeuges.

Die Bauweise, den Lagerbock des Kniehebels über eine Halteplatte auf eine Stellspindel zu setzen, die in einer Mutter gehalten ist, ist zur Aufnahme seitlicher Kräfte nicht geeignet, die aber unweigerlich auftreten, wenn der Antrieb des Kniehebels die Kniehebel seitlich zum Anheben des Tisches in der dargestellten Weise verschiebt. Ein baldiger Verschleiß des Gewindes und Ungenauigkeiten des Stanzhubes und damit Ausschuss an geformten Behältern sind die Folge. Dies lässt sich auch durch in der Schrift genannten zusätzliche Führungen der Halteplatte Pos 50 nicht ausreichend verhindern.

Die Vorrichtung ist zum Einbau von unterschiedlichen Form-/Stanzwerkzeugen vorgesehen. Da diese in der Bauhöhe fertigungsbedingt abweichen ist eine Anpassung des Abstandes zwischen den die beiden Werkzeughälften tragenden Tischen erforderlich. Diese Anpassung ist auch beim Nachschleifen der Schnittteile des Formwerkzeuges erforderlich. Um diese Anpassung durchführen zu können zeigt die genannte Schrift eine von der Stanzhubeinrichtung unabhängige Verstelleinrichtung, die von einer Spindel (Pos. 47) gebildet wird. Die Verstellung erfolgt von Hand durch Verdrehung einer auf der Spindel angeordneten konterbaren Mutter. Diese Art der Verstellung und Anpassung ist umständlich, weil dieser Bereich der Vorrichtung schlecht zugänglich ist. Eine Abspeicherung der Lage der beiden Tische zueinander in der Steuerung und eine Veränderung der Stanzgeschwindigkeit und des Tischabstandes sind bei laufender Vorrichtung nicht möglich.

Der Erfindung liegt die Aufgabe zugrunde, die Vorrichtung so auszubilden, dass der vom Schließhub des Tisches unabhängige Stanzhub auf einfache Weise in seiner Hubgröße und Hubgeschwindigkeit bei laufender Vorrichtung verändert und reproduzierbar und in der Steuerung abgespeichert werden kann. Zudem sollten mit der Stanzhubeinrichtung sowohl der Stanzhub als auch die Lageveränderung zwischen den beiden die Werkzeughälften tragenden Tischen vorgenommen werden können. Es sollte also nur ein Antrieb für Stanzhub und Lageeinstellung erforderlich sein. Die Bauteile für die Stanzhubbewegung sollten keiner Belastung durch die Hubbewegung des einen Tisches unterliegen.

Diese Aufgabe wird gelöst durch eine Vorrichtung gemäß Anspruch 1. Vorteilhafter Weiterbildungen sind in den Unteransprüchen dargelegt.

Die Vorrichtung ist anhand der schematischen Zeichnungen näher beschrieben. Es zeigen:

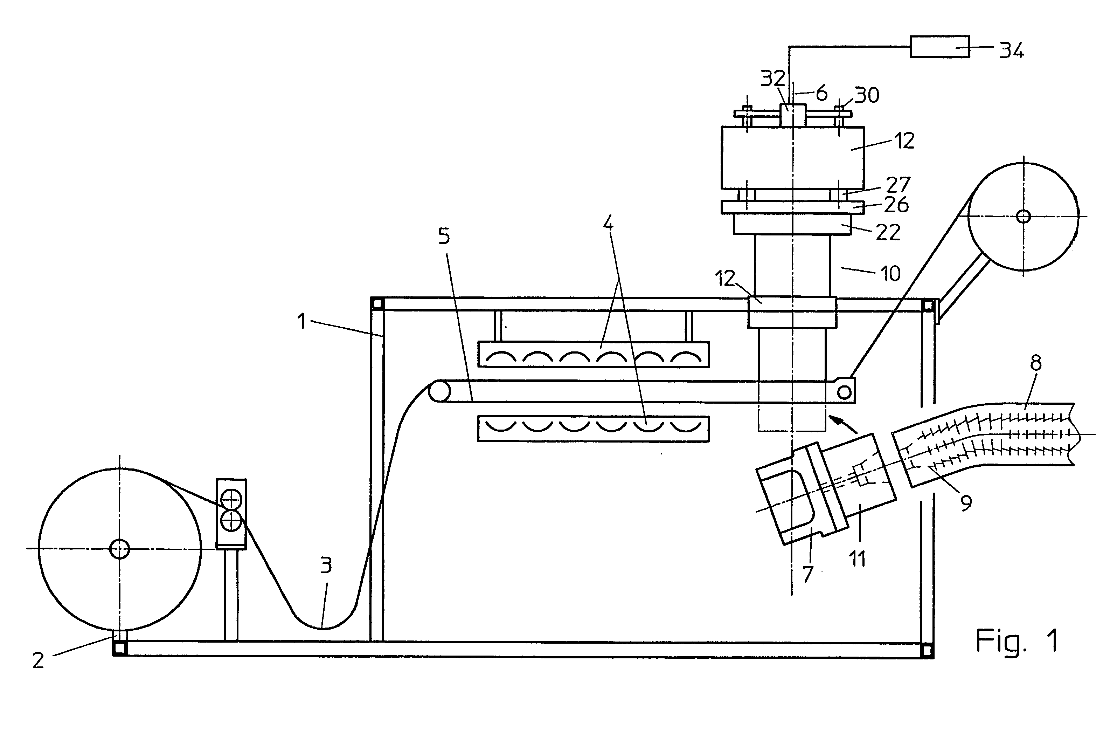

- Figur 1: eine Seitenansicht der Vorrichtung
- Figur 2: einen Schnitt durch die Formstation und das Form-/Stanzwerkzeug.

In einem Gestell 1 sind die wesentlichen Teile der Vorrichtung untergebracht, eine Rollenaufnahme 2 steht eingangsseitig und entfällt, wenn die zu verformende Folienbahn 3 direkt von einem Extruder zugeführt wird. Auch die Heizeinrichtung 4 ist bei Extruderverkettung eventuell nicht erforderlich. Eine intermittierend betriebene Transporteinrichtung 5 führt die Folienbahn 3 zu einer Formstation 6, in der mittels Druckluft oder Vakuum Behälter 9 mittels eines kombinierten Form-/Stanzwerkzeuges, bestehend aus Oberteil 10 und Unterteil 11, geformt und ausgestanzt werden. Nach dem Absenken und ggf. Schwenken des Formtisches 7 mit dem formgebenden Unterteil 11 werden die Behälter 9 in Stapelrinnen 8 ausgestoßen oder auf andere Weise in entsprechende Nachfolgeaggregate übergeben.

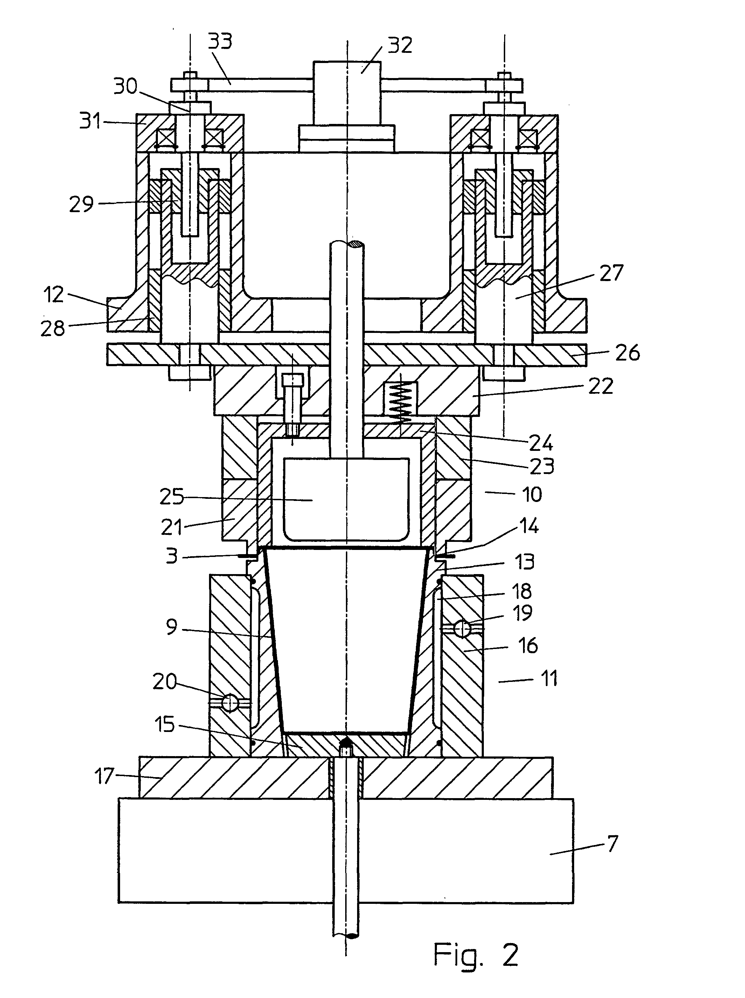

Figur 2 zeigt den Aufbau des Form-/Stanzwerkzeuges und die Einbausituation in die Formstation 6. Hierzu weist das Unterteil 11 pro Formnest einen Schnittstempel 13 mit einer Schnittkante 14 und einen höhenbeweglichen Formboden 15. auf, ferner eine Aufnahme 16 für alle Schnittstempel 13 und die Grundplatte 17. Im Schnittstempel 13 kann ein Formeinsatz eingesetzt sein, der der Form des Behälters 9 entspricht. Schnittstempel 13 und Formeinsatz können aber auch einstückig ausgebildet sein wie in Figur 2 dargestellt. Zwischen Schnittstempel 13 und Aufnahme 16 ist eine Kühlkammer 18 zur Kühlung der geformten Behälter 9 eingearbeitet, die mit einer Wasserzuführung 19 und einer Wasserableitung 20 in Verbindung steht.

Das Oberteil 10 setzt sich zusammen aus der Matrize 21, der Kopfplatte 22 und der Zwischenplatte 23, sowie einem Niederhalter 24 und einem Streckhelfer 25 pro Formnest. Über einen nicht dargestellten Anschluss wird taktweise Druckluft ins Innere des Oberteils geführt. Das Form-/Stanzwerkzeug weist wie dargestellt eine oder mehrere Reihen von Formnestern auf, wobei jede Reihe mehrere Formnester beinhaltet. Oberteil 10 und Unterteil 11 sind über nicht dargestellte Führungen zueinander geführt.

Das Oberteil 10 sitzt mit seiner Kopfplatte 22 an einer Platte 26, an der mindestens zwei, vorzugsweise vier Bolzen 27 befestigt sind. Diese Bolzen 27 sind gleitend geführt in Buchsen 28, die im starren Obertisch 12 sitzen. An den Bolzen 27 ist stirnseitig eine Mutter 29 eingesetzt, mit der eine Spindel 30 in Eingriff steht. Diese Spindel 30 ist in einem an der Oberbrücke 26 befestigten Deckel 31 gelagert und alle Spindeln 30 werden von einem Antrieb 32 aus über eine Gleichlaufeinrichtung 33 synchron bewegt. Als Gleichlaufeinrichtung 33 bieten sich Ketten/Kettenräder, Zahnscheiben/Zahnriemen oder wie dargestellt ein Getriebe mit Hohlwelle und entsprechenden Gelenkwellenverbindungen an. Als Antrieb 32 ist ein Servomotor vorzugsweise einzusetzen, weil dieser auf einfache Weise mit einer veränderbaren Drehzahl betrieben werden kann, was sich auf die Veränderung der Stanzgeschwindigkeit auswirkt. Außerdem kann diesen Weg genau und reproduzierbar vorgegeben und auch verändert werden, so dass jederzeit, auch bei laufender Vorrichtung, diese Werte verändert und dem Optimum angepasst werden können. Die Werte werden in der Steuerung der Vorrichtung abgespeichert. Sie können deshalb bei Umrüstung der Maschine auf ein anderes Werkzeug jederzeit dem Werkzeug zugeordnet wieder aufgerufen werden. Die Paarung Mutter 29/Spindel 30 wird vorzugsweise als Kugelrollspindel oder bei hohen Stanzkräften als Gewinderollenschraubantrieb ausgebildet.

Der Verfahrensablauf ist wie folgt:

Beim Schließen des Form-/Stanzwerkzeuges wird ein Abschnitt der erwärmten Folienbahn 3 eingespannt, teilweise durchtrennt und die Ausformung der Behälter 9 über Druckluftzufuhr vorgenommen. Über den Antrieb 32 erfolgt eine geringe Stanzhubbewegung in der Größenordnung von 0,5 bis 2 mm und dadurch das restliche Austrennen der Behälter 9. Das Form-/Stanzwerkzeug öffnet und wirft die Behälter 9 aus. Über den Antrieb 32 wird die Platte 26 wieder nach oben in Ausgangslage gefahren. In Ausgangslage steht das Oberteil so, dass bei einem Schließen des Form-/Stanzwerkzeuges das richtige Maß des Durchtrennens des eingespannten Folienbahnabschnittes erfolgt. Sollte diese Stellung aus welchen Gründen auch immer verändert werden müssen, erfolgt dies durch eine entsprechende Eingabe in eine Steuerung 34, mit der der Antrieb 32 in Verbindung steht. Über diese Steuerung 34 kann auch der Stanzhub als Ganzes vorgegeben werden sowie die Drehzahl des Antriebes 32 und damit die Stanzgeschwindigkeit.

## Patentansprüche

1. Vorrichtung zum Formen und Ausstanzen von Behältern (9) aus einer thermoplastischen Kunststofffolie, mit einer Formstation (6) und einem kombinierten Form-/Stanzwerkzeug mit zwei Werkzeughälften (10, 11), wobei die Formstation (6) zwei Tische (7, 12) zur Aufnahme der beiden Werkzeughälften (10, 11) aufweist, mit einem Antrieb (32) für die Schließbewegung des Form-/Stanzwerkzeuges und einer Verstelleinrichtung zum einmaligen Einstellen des Abstandes zwischen den beiden Tischen (7, 12) sowie mit einer Einrichtung zur taktweisen Erzeugung eines geringen Stanzhubes zwischen den beiden Tischen (7, 12), **gekennzeichnet durch** einen gemeinsamen motorischen Antrieb (32) für die Stanzbewegung und die Einstellung des Abstandes zwischen den beiden Tischen (7, 12).

2. Vorrichtung nach Anspruch 1, **dadurch gekennzeichnet, dass** der Antrieb (32) für die Stanzbewegung und die Einstellung des Abstandes zwischen den beiden Tischen (7, 12) an dem Tisch (12) angreift, der nicht die Schließbewegung des Formwerkzeuges vornimmt.

3. Vorrichtung nach Anspruch 1 oder 2, **dadurch gekennzeichnet, dass** der Antrieb (32) ein Servomotor ist.

4. Vorrichtung nach einem der Ansprüche 1 bis 3, **dadurch gekennzeichnet, dass** durch den Antrieb (32) Kugelrollspindeln oder Spindeln (30) eines Gewinderollenschraubantriebes antreib bar sind, die mit einer entsprechenden Mutter (29) in Wirkverbindung stehen.

5. Vorrichtung nach einem der Ansprüche 1 bis 4, **dadurch gekennzeichnet, dass** die Muttern (29) an Bolzen (27) befestigt sind, die im starrem Obertisch (12) in Buchsen (28) geführt und an einer Platte (26) gemeinsam befestigt sind, an der das Oberteil (10) des Form-/Stanzwerkzeuges befestigt ist.

6. Vorrichtung nach 4 oder 5, **dadurch gekennzeichnet, dass** alle Spindeln (30) über einen Gleichlauf in Form von Kettentrieben, Zahnriementrieben oder Gelenkwellen verbunden sind.

7. Vorrichtung nach einem der Ansprüche 1 bis 6, **dadurch gekennzeichnet, dass** die Steuerung (34) der Vorrichtung so ausgebildet ist, dass Werte für die Hubgeschwindigkeit des Antriebes (32) und die Lage der Platte (26) vorgegeben, abgeändert und abgespeichert werden können.

## Claims

1. Device for moulding and punching out containers (9) from a thermoplastic plastics material web, with a moulding station (6) and a combined moulding and punching tool with two tool halves (10, 11), wherein the moulding station (6) comprises two tables (7, 12) for receiving the two tool halves (10, 11), with a drive (32) for the closing movement of the moulding and punching tool and a displacing device for single setting of the spacing between the two tables (7, 12) as well as with a device for cyclically producing a small punching stroke between the two tables (7, 12), **characterised by** a common motorised drive (32) for the punching movement and the setting of the spacing between the two tables (7, 12).

2. Device according to claim 1, **characterised in that** the drive (32) for the punching movement and the setting of the spacing between the two tables (7, 12) acts on the table (12) which does not undertake the closing movement of the moulding tool.

3. Device according to claim 1 or 2, **characterised in that** the drive (32) is a servomotor.

4. Device according to one of claims 1 to 3, **characterised in that** ball roller spindles or spindles (30) of a threaded roller screw drive are drivable by the drive (32) and are disposed in operative connection with the corresponding nut (29).

5. Device according to one of claims 1 to 4, **characterised in that** the nuts (29) are fastened to pins (27) which are guided in the rigid upper table (12) in bushes (28) and are fastened in common to a plate (26) which is fastened to the upper part (10) of the moulding and punching tool.

6. Device according to claim 4 or 5, **characterised in that** all spindles (30) are connected by way of synchronising means in the form of chain drives, cogged belt drives or articulated shafts.

7. Device according to one of claims 1 to 6, **characterised in that** the control (34) of the device is so constructed that values for the stroke speed of the drive (32) and the position of the plate (26) can be predetermined, changed and stored.

## Revendications

1. Dispositif pour former et découper des récipients (9) dans une feuille de matière thermoplastique comprenant un poste de formage (6) et un outil de formage et de découpage combiné à deux moitiés d'outil (10, 11),
le poste de formage (6) ayant deux plateaux (7, 12) pour recevoir les deux moitiés d'outil (10, 11), un moyen d'entraînement (32) pour le mouvement de fermeture de l'outil de formage/découpage et une installation de réglage pour régler une seule fois la distance entre les deux plateaux (7, 12) ainsi qu'une installation pour générer de façon cadencée une faible course de découpage entre les deux plateaux (7, 12),
**caractérisé par**
un moyen d'entraînement à moteur (32), commun, pour le mouvement de découpage et le réglage de la distance entre les deux plateaux (7, 12).

2. Dispositif selon la revendication 1,
**caractérisé en ce que**
le moyen d'entraînement (32) du mouvement de découpage et le réglage de la distance entre les deux plateaux (7, 12) agissent sur le plateau (12) qui n'effectue pas le mouvement de fermeture de l'outil de formage.

3. Dispositif selon la revendication 1 ou 2,
**caractérisé en ce que**
le moyen d'entraînement (32) est un servomoteur.

4. Dispositif selon l'une des revendications 1 à 3,
**caractérisé en ce que**
le moyen d'entraînement (32) entraîne des broches à billes ou des broches (30) d'un entraînement à vis et billes coopérant avec un écrou (29) correspondant.

5. Dispositif selon l'une des revendications 1 à 4,
**caractérisé en ce que**
les écrous (29) sont fixés sur des goujons (27) guidés dans des douilles (28) du plateau supérieur rigide (12) et fixés en commun à un plateau (26) auquel est fixée la partie supérieure (10) de l'outil de formage/découpage.

6. Dispositif selon la revendication 4 ou 5,
**caractérisé en ce que**
toutes les broches (30) sont reliées par un moyen de synchronisation sous la forme de transmission à chaîne de courroie crantée ou d'arbre à cardan.

7. Dispositif selon l'une des revendications 1 à 6,
**caractérisé en ce que**
la commande (34) du dispositif est réalisée pour prédéfinir la vitesse de déplacement du moyen d'entraînement (32) et la position du plateau (26), et pouvoir les modifier et les mémoriser.
